# EUROPÄISCHE PATENTSCHRIFT

(11) **EP 2 698 296 B1**
(45) Veröffentlichungstag und Bekanntmachung des Hinweises auf die Patenterteilung: **29.11.2017**
(21) Anmeldenummer: 13178196.5
(22) Anmeldetag: 26.07.2013
(51) Int. Cl.: B60S 9/08, B65D 90/14, F16B 7/10, F16B 21/14

(54) **Längenverstellbares Teleskoprohr**
Length-adjustable telescopic tube
Tube télescopique réglable en longueur

(30) Priorität: 14.08.2012 DE 102012214414
(43) Veröffentlichungstag der Anmeldung: 19.02.2014
(73) Patentinhaber: JOST-Werke Deutschland GmbH, 63263 Neu-Isenburg (DE)
(72) Erfinder: Paulekuhn, Hans-Peter, 34454 Bad Arolsen (DE); Albers, Stephan, 32361 Pr. Oldendorf (DE)
(74) Vertreter: Mehler Achler

(56) Entgegenhaltungen:
- EP-A1- 0 086 691
- DE-U1- 8 810 944
- DE-U1-202005 014 793
- US-A- 3 415 093

## Beschreibung

Die Beschreibung der Erfindung betrifft ein längenverstellbares Teleskoprohr gemäß dem Oberbegriff des Anspruchs 1. Die Erfindung bezieht sich auch auf ein Stützbein mit einem solchen längenverstellbaren Teleskoprohr.

Die insbesondere von Wechselaufbauten für Lastkraftwagen bekannten teleskopartig längenverstellbaren Stützbeine bestehen im Allgemeinen aus einander umschließenden Rohrstücken mit mehreren Durchgangsbohrungen (Querbohrung). In einer gewünschten Auszugsposition wird ein Bolzen (Querbolzen) durch eine Durchgangsbohrung hindurchgesteckt. Um einen Verlust des Bolzens zu verhindern, muss dieser durch einen federnden Sicherungsstecker gesichert werden.

Das Gebrauchsmuster G 9403053.7 schlägt ein Teleskoprohr vor, das dadurch gekennzeichnet ist, dass in einem äußeren Rohrabschnitt ein jeweils eine erste Öffnung von axial benachbarten Durchgangsbohrungen verbindender Schlitz vorgesehen ist und der Bolzen einen ersten, einen zweiten und einen dritten Abschnitt aufweist, die sich in radialer Richtung erstrecken, wobei der erste und der zweite Abschnitt an die erste und zweite Öffnung der Durchgangsbohrung angepasst sind und in einer ersten, die Rohrabschnitte verriegelnden Stellung des Bolzens in den Öffnungen ruhen, und wobei der dritte Abschnitt in einer zweiten, längs verschobenen, die Rohrabschnitte entriegelnden Stellung des Bolzens bei einer Längenverstellung des Rohres gleitend in dem Schlitz geführt wird. Zur Vorspannung des Bolzens gegen einen Anschlag ist eine Feder vorgesehen.

Ein Nachteil dieser Vorrichtung besteht darin, dass aufgrund der relativ großen Länge des Teleskopbolzens die Druckfeder entsprechend verformt werden muss, sodass insbesondere in der letzten Phase der Bewegung des Bolzens in die Freigabestellung eine entsprechend hohe Federkraft zu überwinden ist. Außerdem kann es zu einem Verkanten kommen, sodass unter Umständen die Funktion nicht mehr sichergestellt ist.

Aus der DE 20209361 U1 sind federlose Sicherungselemente bekannt, wobei diese Sicherungselemente als Dauermagnete ausgebildet sind. Diese Magnete müssen jedoch relativ stark sein, damit sichergestellt ist, dass der Teleskopbolzen von den Dauermagneten auch gehalten werden kann. Daraus ergibt sich, dass zum Überführen in die Freigabestellung die Magnetkräfte überwunden werden müssen. Der Teleskopbolzen kann dann zwar ohne Gegenkräfte weiterbewegt werden, zunächst ist jedoch eine relativ große Kraft notwendig.

In der DE 202005014793 U1 wird ein gattungsgemäßes Teleskoprohr offenbart, bei dem das Sicherungselement aus einem fest am Außenrohr angesetzten, jedoch im Abstand zur zugewandten Fläche stehenden Sicherungskörper und einer frei drehbar auf einem Endbereich des Teleskopbolzens gelagerten Falle besteht, die im äußeren, seiner Drehachse abgewandt liegenden Bereich haken- oder u-förmig ausgebildet ist und dieser Bereich zumindest in der Transportstellung des winkelförmigen Stützbeines den Sicherungskörper selbsttätig hintergreift.

Hierbei wird davon ausgegangen, dass die Falle aufgrund ihres exzentrisch zur Bolzenachse vorgesehenen Schwerpunktes gravitationsgetrieben in Schließstellung fällt, wobei der an der Außenseite ungeschützt liegende Sicherungskörper von dem hakenförmigen Abschnitt hintergriffen werden soll. Derartige Stützbeine sind im Alltagsbetrieb zahlreichen Umwelteinflüssen und Verschmutzungen ausgesetzt, sodass die erforderliche freie Drehbarkeit der Falle beeinträchtigt und die als Sicherungskörper vorgesehene Sicherungsscheibe vom Haken nicht umgriffen bzw. hintergriffen werden kann.

Der erforderliche Freiraum hinter der Segmentscheibe kann sich mit Schmutz zusetzen. Segmentscheibe und Falle können sich durch Temperatureinflüsse verziehen und die große Kontaktfläche zwischen Falle und Segmentscheibe führt zu Reibungsverlusten, die ebenfalls die freie Drehbarkeit der Falle beeinträchtigen. Der Benutzer kann sich nicht darauf verlassen, dass die Falle immer von selbst in die Sicherungsposition fällt. Ein manuelles Bewegen der Falle in die Sicherungsstellung ist nur schwer möglich, weil die Falle hierzu nicht ausgebildet ist.

Weitere Nachteile bestehen in der aufwändigen Fertigung bezüglich der Drehbarkeit der Falle und in dem für die drehbare Lagerung erforderlichen Spiel zwischen Bolzen und Falle, was die Handhabung beeinträchtigt.

Aufgabe der Erfindung ist es, ein Teleskoprohr bereitzustellen, dessen Sicherungseinrichtung manuell und zuverlässig in Sicherungsstellung gebracht werden kann.

Diese Aufgabe wird mit einem Teleskoprohr mit den Merkmalen des Anspruchs 1 gelöst.

Das längenverstellbare Teleskoprohr ist dadurch gekennzeichnet, dass die Sicherungseinrichtung einen, an einem ersten Ende des Bolzens angeordneten Drehriegel aufweist, dass der Drehriegel einen Griffhebel und mindestens ein Verschlusselement aufweist, wobei sich der Griffhebel und das Verschlusselement von der Bolzenachse B weg erstrecken und in unterschiedlichen Ebenen E₁. E₂ angeordnet sind, dass der Sicherungskörper eine Öffnung zur Durchführung des Bolzens und mindestens eine in die Öffnung mündende Ausnehmung aufweist, durch die das Verschlusselement in einer ersten Drehstellung des Drehriegels in den Sicherungskörper einführbar ist und dass das Verschlusselement sich in mindestens einer zweiten Drehstellung des Drehriegels zur axialen Festlegung des Bolzens an dem Sicherungskörper abstützt.

Ein Drehriegel ist ein manuell betätigbarer Verschluss, der bequem erfasst und auf einfache Weise in eine Verschluss- oder Sicherungsstellung gebracht werden kann.

Das Verschlusselement ist vorzugsweise eine Riegelnase. Das Verschlusselement kann auch ein Bügel oder Haken sein.

Mit dem Griffhebel, der vorzugsweise länger ist als das Verschlusselement, kann bei der Drehbewegung des Drehriegels ein großes Drehmoment auf das Verschlusselement ausgeübt werden, sodass eine eventuell durch Umwelteinflüsse oder Verschmutzung verursachte Schwergängigkeit der Sicherungseinrichtung auf einfache Weise überwunden werden kann.

Durch die Ausnehmung wird das Verschlusselement in den Sicherungskörper eingeführt. Durch die Anordnung von Griffhebel und Verschlusselement in zwei verschiedenen Ebenen E₁ und E₂ befindet sich nach der Einführung in den Sicherungskörper der Griffhebel vor dem Sicherungskörper und das Verschlusselement hinter dem Sicherungskörper in einem weitgehend geschützten Bereich. Damit ist der Vorteil verbunden, dass das Verschlusselement vor Verschmutzung geschützt ist und der Drehriegel leicht betätigt werden kann.

Die beiden Ebenen E₁ und E₂ sind vorzugsweise senkrecht zur Bolzenachse angeordnet.

Vorzugsweise ist der Drehriegel drehfest an dem Bolzen angeordnet. Beim Drehen des Drehriegels wird der gesamte Bolzen in den Durchgangsbohrungen gedreht, sodass eine in der Regel anfällig, zusätzliche Drehlagerung des Drehhebels am Bolzen entfällt. Dadurch wird die Funktionssicherheit weiter erhöht.

Der Griffhebel und das Verschlusselement können sich in der gleichen Richtung oder in verschiedenen Richtungen von der Bolzenachse B weg erstrecken.

Vorzugsweise erstrecken sich die Griffhebel und das Verschlusselement in entgegengesetzte Richtungen, was u. a. auch fertigungstechnisch von Vorteil ist.

Vorzugsweise erstreckt sich die Ausnehmung des Sicherungskörpers zum unteren Ende des Außenrohrs. Der Begriff "unten" bezieht sich auf eine vertikale Ausrichtung des Teleskoprohres. Das Teleskoprohr ist z. B. als Bestandteil eines Stützbeines in seiner Stützfunktion vertikal ausgerichtet, sodass sich die Ausnehmung von der Bolzenachse vorzugsweise im Wesentlichen parallel zur Längsachse des Teleskoprohres vorzugsweise nach unten erstreckt.

Wenn gemäß einer bevorzugten Ausführungsform Drehriegel und Verschlusselement in entgegengesetzten Richtungen weisen, bedeutet dies für den Drehriegel, dass er sich vorzugsweise immer dann in seiner Sicherungsstellung befindet, wenn der Griffhebel im Wesentlichen nach unten weist. Für den Nutzer ist damit erkennbar, dass der Drehriegel sich in der Sicherungsstellung befindet.

Um den Drehriegel in die zweite Drehstellung, d. h. seine Sicherungsstellung zu bringen, ist der Drehriegel dementsprechend nach unten zu schwenken, was durch die Gravitation erleichtert wird. Der Schwerpunkt des Drehriegels ist vorzugsweise zur Drehachse des Bolzens in Richtung des Griffhebels versetzt. Der Drehriegel befindet sich in seiner Sicherungsstellung somit in einer stabilen Lage. Da der Drehriegel zum Entriegeln um 180° geschwenkt werden muss, ist eine stabile Sicherungsstellung z. B. auch bei einem Wechselbehälter gewährleistet, wenn das Stützbein sich in seiner eingeschobenen, horizontal ausgerichteten Stellung befindet. In dieser Position müsste der Drehriegel zum Entriegeln immer noch um 90° gedreht werden.

Vorzugsweise ist der Sicherungskörper eine Platte, die im Abstand zur Außenfläche des Außenrohrs angeordnet ist, wobei zwischen der Platte und der Außenfläche des Außenrohrs ein Zwischenraum gebildet wird. Dieser Zwischenraum steht als Schwenkraum für das Verschlusselement zur Verfügung. Das Verschlusselement liegt hinter der Platte und wird durch diese geschützt.

Dieser Zwischenraum ist vorzugsweise seitlich mindestens teilweise geschlossen und wird dadurch weitgehend vor dem Eindringen von Schmutz geschützt. Es ist bevorzugt, die Platte mit gebogenen Endstücken zu versehen, mit denen die Platte an der Außenseite des Außenrohrs befestigt wird. Diese gebogenen Endstücke bilden einen seitlichen Abschluss des Zwischenraums.

Vorzugsweise weist der Drehriegel zwei Hörner auf. Diese erleichtern das Erfassen und Drehen des Drehriegels. Der Drehriegel kann dadurch einerseits am Griffhebel und andererseits an den Hörnern erfasst und gedreht werden.

Vorzugsweise liegen die Hörner in derselben Ebene E₁ wie der Griffhebel.

Gemäß einer insbesondere aus fertigungstechnischen Gründen bevorzugten Ausführungsform weisen die Hörner und die Riegelnase in dieselbe Richtung.

Vorzugsweise sind der Sicherungskörper und der Drehriegel derart aufeinander abgestimmt, dass mindestens in der ersten Drehstellung des Drehriegels der Griffhebel den Sicherungskörper überragt. Vorzugsweise steht der Griffhebel des Drehriegels seitlich und/oder unten und/oder oben gegenüber dem Sicherungskörper vor.

Durch diese Maßnahmen wird insbesondere beim Einführen des Bolzens und bei Erreichen seiner Endposition ein entsprechender Freiraum zum Greifen des Drehriegels zur Verfügung gestellt. Dies gilt auch für das Ergreifen des Drehriegels zum Herausziehen des Bolzens.

Vorzugsweise weist der Bolzen eine Verliersicherung auf. Dadurch wird sichergestellt, dass der Bolzen insbesondere dann, wenn eine Längenverstellung des Teleskoprohres vorgenommen wird, nicht herausfallen kann. Die Verliersicherung kann gemäß einer besonderen Ausführungsform ein gegenüber der Bolzenfläche radial vorstehendes Sicherungselement sein. In einer besonderen Ausgestaltung kann dieses Sicherungselement ein Ringbund sein, der an einem zweiten Ende des Bolzens vorgesehen ist.

Die Abmessungen des Sicherungselements sind so gewählt, dass der Bolzen mit dem Sicherungselement durch die Durchgangsbohrungen, nicht aber durch die Öffnung im Sicherungskörper bewegt werden kann. Vorzugsweise ist der Außendurchmesser des Sicherungselementes oder des Ringbundes größer als der Durchmesser der Öffnung des Sicherungskörpers. Beim Herausziehen des Bolzens aus den Durchgangsbohrungen bleibt der Bolzen an dem Sicherungskörper hängen.

Vorzugsweise weist der Drehriegel einen durchmesserreduzierten Abschnitt auf. Der durchmesserreduzierte Abschnitt befindet sich vorzugsweise hinter dem Griffhebel zwischen den Ebenen E₁ und E₂. Der Durchmesser des Abschnitts ist gegenüber dem Durchmesser des Bolzens reduziert. Es wird eine Nut ausgebildet, in die der Sicherungskörper vorzugsweise in entriegelter Drehstellung des Drehriegels unter Last eingreift, wodurch ein unbeabsichtigtes Herausrutschen des Bolzens verhindert wird.

Das erfindungsgemäße Teleskoprohr kann für LKW-Wechselaufbauten, für Stützwinden oder für Fallstützen für LKW-Auflieger Verwendung finden.

Ein Stützbein für LKW-Wechselaufbauten, eine Fallstütze oder Stützwinde für LKW-Auflieger weist ein solches längenverstellbares Teleskoprohr auf, wobei das Innenrohr ein Fußelement aufweist. Bei einem Stützbein für LKW-Auflieger ist am Außenrohr rechtwinklig ein Schenkel zur schwenkbaren Befestigung sowie eine Stützstrebe vorgesehen.

Derartige Stützwinden enthalten eine Spindel und einen Spindelantrieb, der elektrisch oder manuell betrieben werden kann. Außer dem Teleskophub können Stützwinden einen absteckbaren Fallhub aufweisen, der mit den Merkmalen des Anspruchs 1 realisiert wird.

Bei Fallstützen wird auf den Spindelantrieb verzichtet, die Längenverstellung erfolgt ausschließlich über das absteckbare Teleskoprohr.

Beispielhafte Ausführungsformen werden nachfolgend anhand der Zeichnungen näher erläutert.

Es zeigen:
- Figur 1: ein Wechselaufbau in perspektivischer Darstellung,
- Figur 2: eine vergrößerte Darstellung eines Stützbeins eines Wechselaufbaus gemäß der Figur 1,
- Figur 3: eine perspektivische Darstellung des unteren Bereiches eines Stützbeins mit einem Teleskoprohr,
- Figur 4: eine perspektivische Darstellung eines Bolzens mit Sicherungseinrichtung gemäß einer ersten Ausführungsform,
- Figur 5: die Draufsicht auf ein Teleskoprohr mit Sicherungskörper gemäß Figur 3 ohne Bolzen,
- Figur 6: ein Vertikalschnitt des in Figur 3 gezeigten Teleskoprohrs,
- Figur 7: eine perspektivische Darstellung eines Teleskoprohrs gemäß einer zweiten Ausführungsform,
- Figur 8: eine perspektivische Darstellung des Bolzens gemäß der Figur 7,
- Figur 9: ein Vertikalschnitt des Teleskoprohrs gemäß der Figur 7,
- Figur 10: ein Vertikalschnitt des Teleskoprohres gemäß der Figur 7 bei vertikaler Belastung und Bolzen in entriegelter Drehstellung, und
- Figur 11: eine Fallstütze mit einem Teleskoprohr.

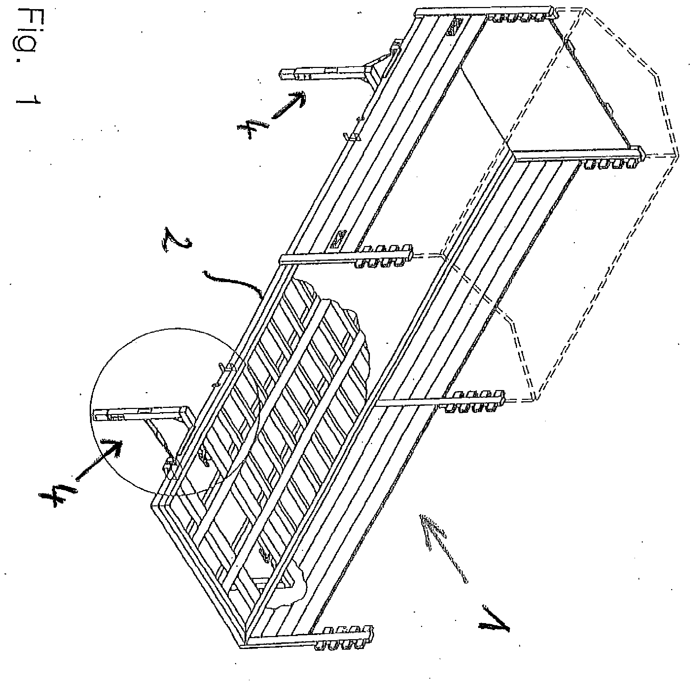

In der Figur 1 ist ein Wechselaufbau 1 für LKWs dargestellt, der einen Rahmen 2 aufweist, an dessen Unterseite vier Stützbeine 4 angeordnet sind.

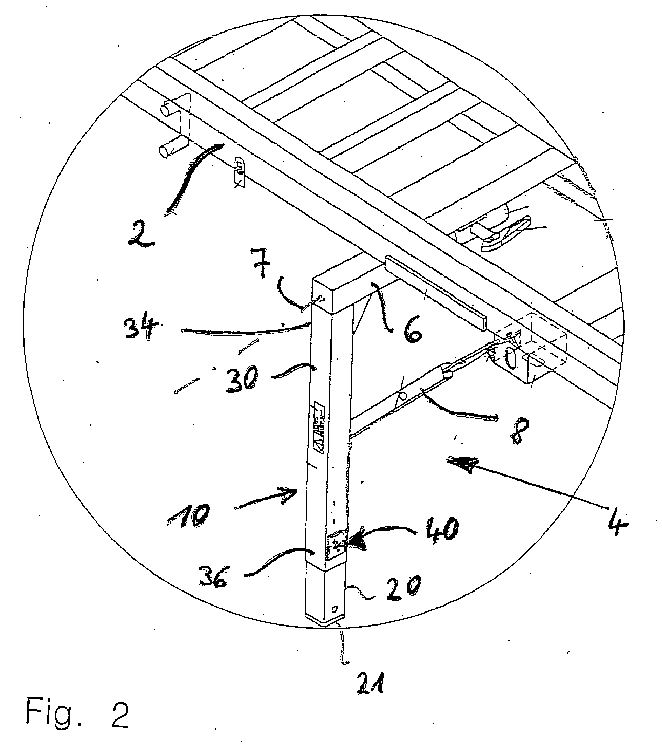

In der Figur 2 ist ein solches Stützbein 4 aus Figur 1 vergrößert dargestellt. Das Stützbein 4 weist ein Teleskoprohr 10 auf, das in der hier gezeigten Darstellung seine Stützfunktion erfüllt und somit vertikal ausgerichtet ist. Das Teleskoprohr 10 umfasst ein Innenrohr 20 mit einem Fußelement 21 und ein Außenrohr 30. Die Absteckung des Teleskoprohrs 10 in der gewünschten ausgezogenen Position erfolgt mittels eines Bolzens 40, was im Zusammenhang mit den nachfolgenden Figuren näher beschrieben wird.

Am oberen Ende 34 des Außenrohrs 30 ist dieses Teleskoprohr 10 mit einem horizontalen Schenkel 6 versehen, der rechtwinklig am Außenrohr 30 befestigt ist. Das Stützbein 4 ist um die Schwenkachse 7 schwenkbar am Rahmen 2 gelagert und kann in Ruheposition an den Rahmen 2 beigeschwenkt werden. Ferner ist eine Stützstrebe 8 vorgesehen, mit der das vertikal ausgerichtete Teleskoprohr 10 in seiner Stützposition stabilisiert wird. Die Stützstrebe 8 ist schwenkbar am Außenrohr 30 angeordnet.

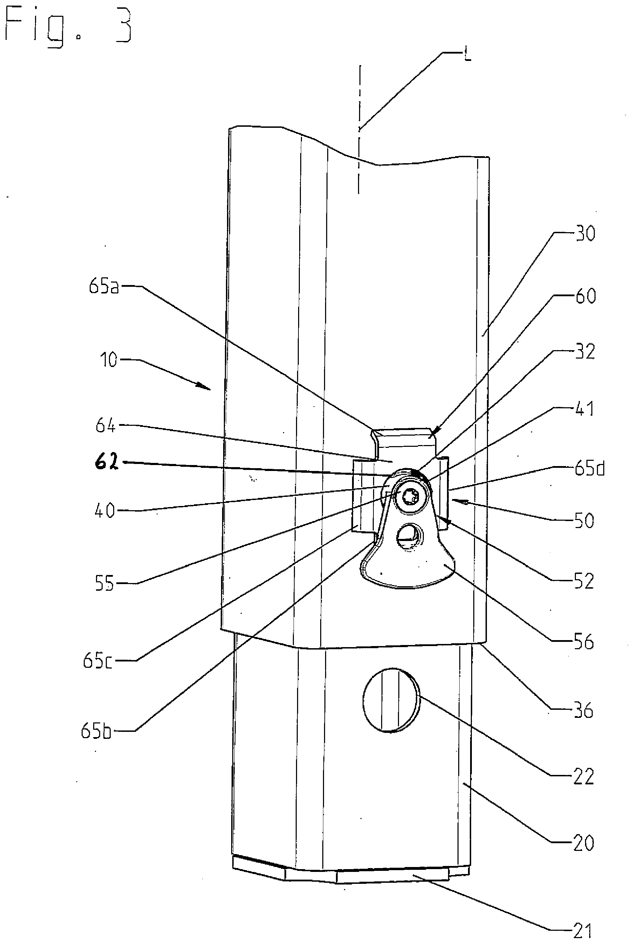

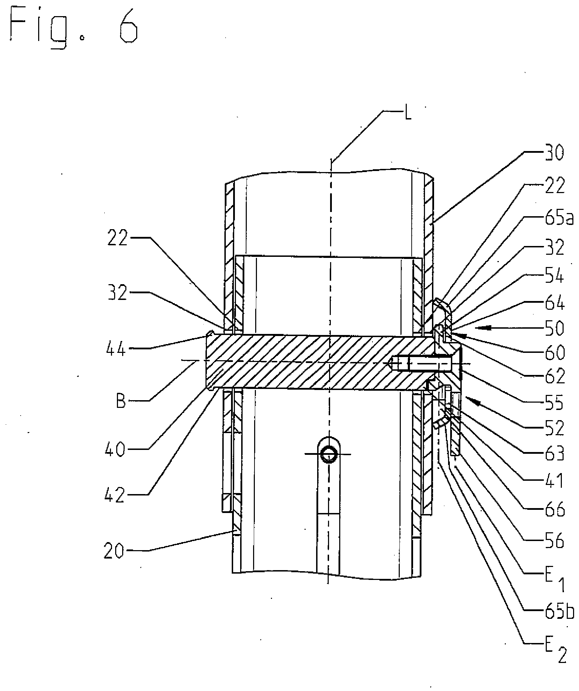

In der Figur 3 ist der untere Bereich eines solchen Teleskoprohres 10 vergrößert und perspektivisch dargestellt. Das Teleskoprohr 10 besitzt ein Innenrohr 20 und ein Außenrohr 30, wobei im Innenrohr 20 eine Reihe von übereinander angeordneten Durchgangsbohrungen 22 und im Außenrohr 30 eine Durchgangsbohrung 32 vorgesehen sind (siehe auch Figur 6). In der Figur 3 ist eine Durchgangsbohrung 22 zu sehen, während die übrigen Durchgangsbohrungen 22 durch das Außenrohr 30 verdeckt sind.

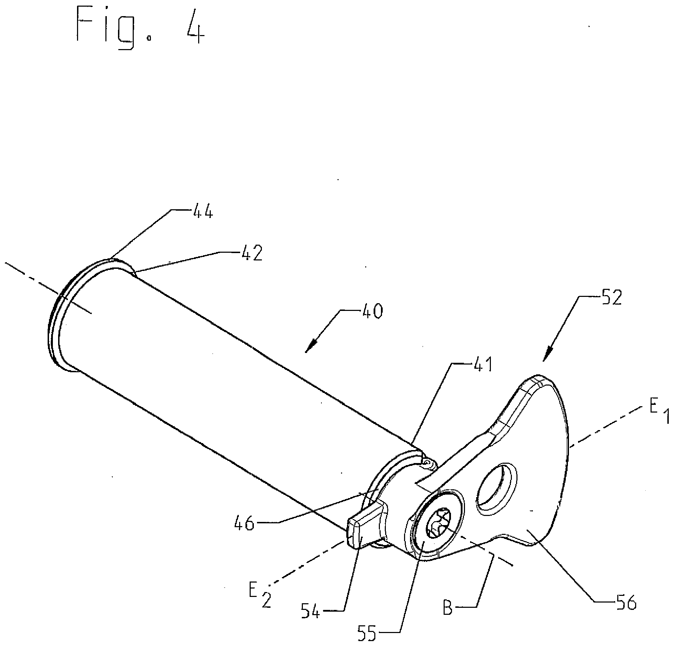

Mittels eines in die Durchgangsbohrungen 22, 32 eingesteckten Bolzens 40 kann eine Absteckung in der jeweils gewünschten Position vorgenommen werden. An seinem ersten Ende 41 weist der Bolzen 40 als Teil der Sicherungseinrichtung 50 einen Drehriegel 52 auf, der mittels einer Schraube 55 an der Stirnfläche 46 des Bolzens 40 befestigt ist (s. Figur 4). Dieser Drehriegel 52 weist einen Griffhebel 56 auf, an dem der Drehriegel 52 erfasst und betätigt werden kann. Der Griffhebel 56 erstreckt sich in der Darstellung der Figur 3 nach unten und somit parallel zur Längsachse L des Teleskoprohres 10.

Ferner ist an dem Drehriegel 52 ein Verschlusselement 54 (s. Figur 4) in Gestalt einer Riegelnase vorgesehen, die in Figur 3 durch den Sicherungskörper 60 verdeckt ist. Der Sicherungskörper 60 als weiterer Bestandteil der Sicherungseinrichtung 50 weist eine Öffnung 62 auf und ist mit einem Abstand bezüglich der Außenfläche des Außenrohrs 30 angeordnet. In der hier gezeigten Ausführungsform besteht der Sicherungskörper 60 aus einer Platte 64 mit gebogenen Endstücken 65a und 65b und gebogenen Seitenstücken 65c,d, mit denen der Sicherungskörper 60 an dem Außenrohr 30 befestigt ist. Mittels der abgebogenen Stücke 65a,b,c,d wird ein Zwischenraum 66 zwischen der Außenfläche des Außenrohrs 30 und der Platte 64 gebildet.

Das Innenrohr 20 besitzt am unteren Ende ein Fußelement 21, das in der hier gezeigten Ausführungsform eine Bodenplatte ist.

In der Figur 4 ist eine perspektivische Darstellung des Bolzens 40 gemäß einer ersten Ausführungsform zu sehen. Der Bolzen 40 besitzt am ersten Ende 41 den Drehriegel 52, der in einer ersten Ebene E₁ einen Griffhebel 56 aufweist. In einer zu diesem Griffhebel 56 versetzten zweiten Ebene E₂ ist das Verschlusselement 54 angeordnet. Das Verschlusselement 54 und der Griffhebel 56 erstrecken sich von der Bolzenachse B radial in entgegengesetzte Richtungen. Die Länge des Griffhebels 56 ist größer, als die Länge des Verschlusselements 54. Der Drehriegel 52 ist mittels der Schraube 55 drehfest mit dem Bolzen 40 verbunden.

Am zweiten Ende 42 besitzt der Bolzen 40 ein Sicherungselement, das radial gegenüber der Außenfläche des Bolzens 40 vorsteht. In der hier gezeigten Ausführungsform ist das Sicherungselement ein Ringbund 44.

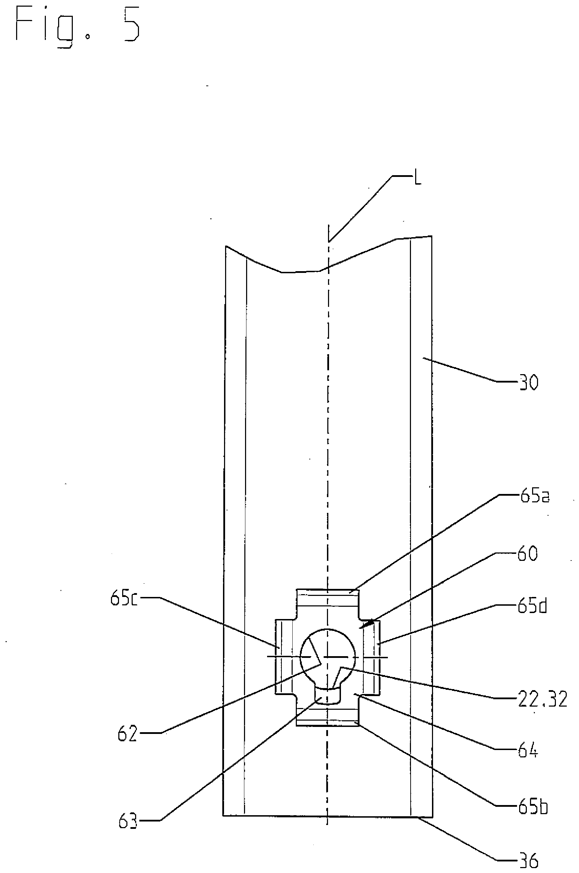

In der Figur 5 ist die Draufsicht auf das Außenrohr 30 dargestellt. Der Sicherungskörper 60 besitzt eine Öffnung 62 und eine Ausnehmung 63, die in die runde Öffnung 62 einmündet. Die Ausnehmung 63 erstreckt sich in Richtung des unteren Endes 36 des Außenrohrs 30 und somit parallel zur Längsachse L des Teleskoprohrs 10. Der Durchmesser der Öffnung 62 ist ebenso wie der Durchmesser der Durchgangsbohrung 32 auf den Durchmesser des Bolzens 40 (nicht dargestellt) abgestimmt.

Der Durchmesser der Öffnung 62 ist kleiner als die Durchmesser der Durchgangsbohrungen 22 und 32 und als der Außendurchmesser des Ringbundes 44 des Bolzens 40, so dass der Bolzen 40 selbst durch die Öffnung 62 hindurchgleiten kann, der Ringbund 44 jedoch nicht. Daher wird der Bolzen 40 zur Montage von der Rückseite eingeschoben und dann wird von vorne der Griffhebel 56 angeschraubt.

Die Ausnehmung 63 ist derart dimensioniert, dass das Verschlusselement 54 beim Einstecken des Bolzens 40 durch die Ausnehmung 63 hindurchgreifen kann. Der Bolzen 40 wird in dieser ersten Drehstellung in den Sicherungskörper 60 eingeführt. Durch Drehen des Drehriegels 52 in eine zweite Drehstellung wird das Verschlusselement 54 im Zwischenraum 66 (s. Figur 6) hinter die Platte 64 bewegt. Bei axialen Bewegungen des Bolzens 40 stützt sich die Riegelnase am Sicherungskörper 60 oder an der Fläche des Außenrohres 30 ab und sichert somit den Bolzen 40 in seiner die Rohre 20, 30 arretierenden Position.

Die verriegelte Position wird in der Figur 6 dargestellt. Es ist deutlich zu sehen, dass der Griffhebel 56 und das als Riegelnase ausgebildete Verschlusselemenfi 54 in den beiden Ebenen E1 und E2 angeordnet sind. Zwischen diesen beiden Ebenen befindet sich der Sicherungskörper 60 in Form der Platte 64, die mittels der gebogenen Endstücke 65a,b und Seitenstücke 65c,d am Außenrohr 30 befestigt ist. Die Stücke 65a,b,c,d begrenzen den Zwischenraum 66 und schützen ihn vor dem Eindringen von Schmutz.

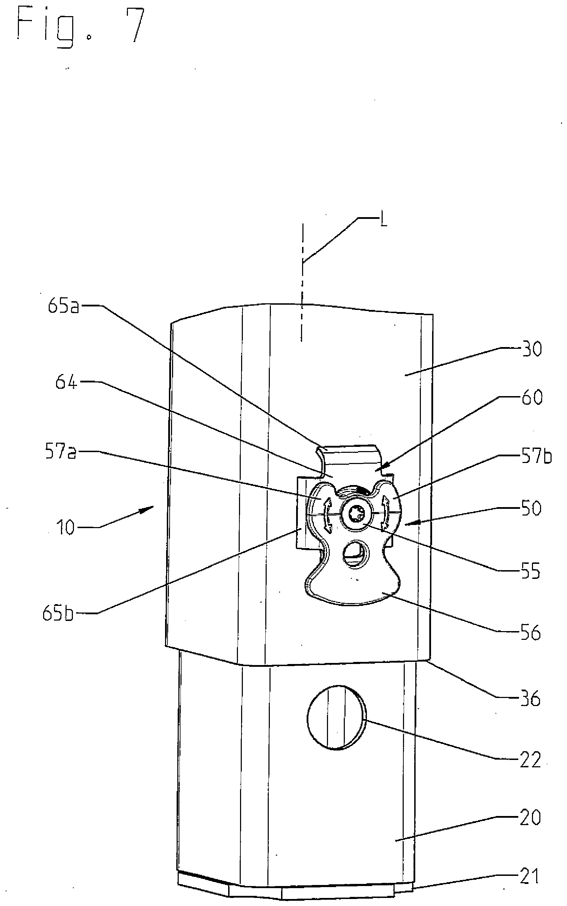

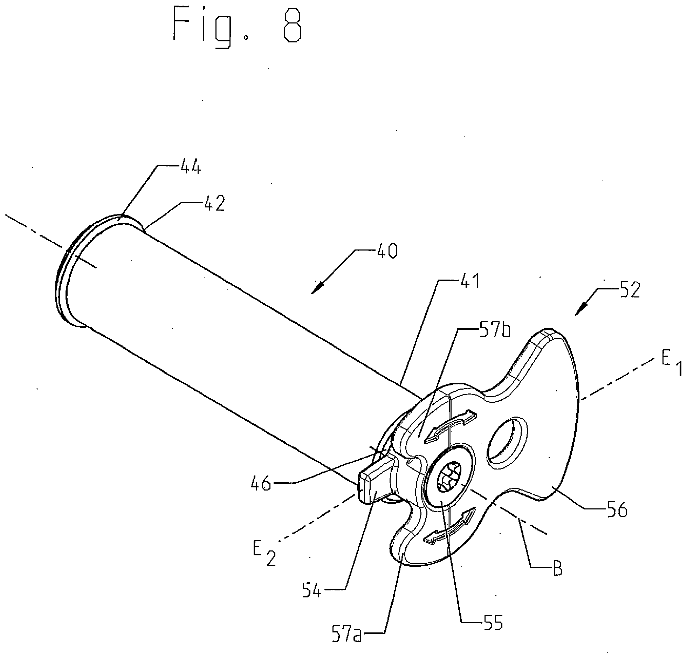

In der Figur 7 ist eine weitere Ausführungsform dargestellt, in der der Drehriegel 52 zusätzlich zwei Hörner 57a,b aufweist. Die beiden Hörner 57a,b erstrecken sich wie die Riegelnase 54 nach oben und dienen zusätzlich zum Ergreifen des Drehriegels 52. Hörner 57a,b und Griffhebel 56 liegen in derselben Ebene E₁. Eine vergrößerte Darstellung des Bolzens 40 mit Drehriegel 52 gemäß der zweiten Ausführungsform ist in der Figur 8 zu sehen.

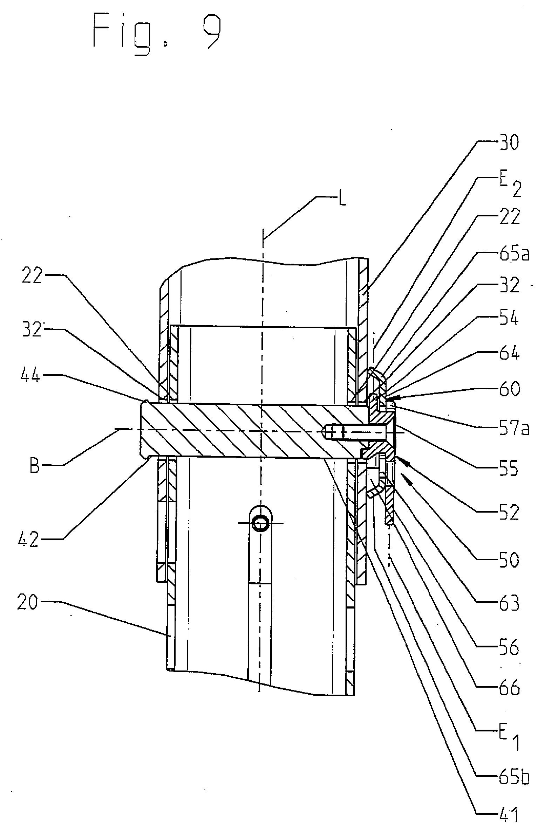

In der Figur 9 ist ein Vertikalschnitt durch das in Figur 7 gezeigte Teleskoprohr dargestellt. Die Figur 9 entspricht bis auf die Hörner 57a,b der Darstellung in Figur 6.

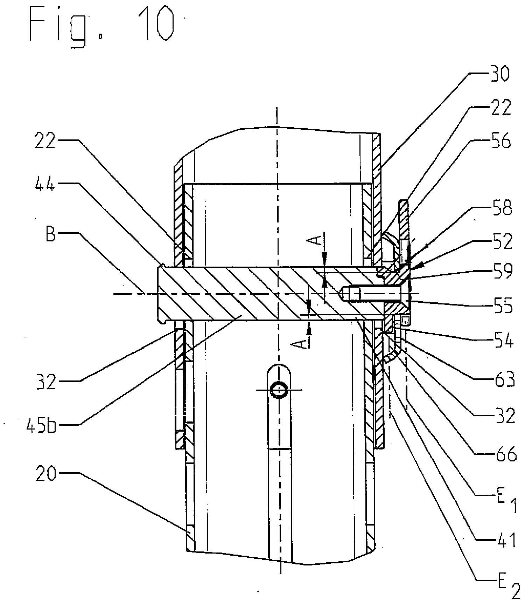

In Figur 10 ist im Unterschied zur Figur 9 die entriegelte Drehstellung des Drehriegels 52 dargestellt. Das Teleskoprohr 10 befindet sich unter Last, was an der Absenkung des Außenrohres 30 im Vergleich zum Innenrohr 20 zu sehen ist. Der Drehriegel 52 weist einen gegenüber dem Bolzendurchmesser um das Maß 2 x A reduzierten Durchmesser auf. Der durchmesserreduzierte Abschnitt 58 befindet sich zwischen den Ebenen E₁ und E₂. Es wird dadurch eine Nut 59 gebildet, in die die Platte 64 mit dem Rand der Öffnung 62 von oben eingreift. Durch die Nut 59 und den Ringbund 44 ist gewährleistet, dass dann, wenn das Stützbein 4 mit dem Gewicht z. B. des Wechselbehälters belastet ist, der Bolzen 40 auch in entriegelter Drehstellung nicht herausgezogen werden kann.

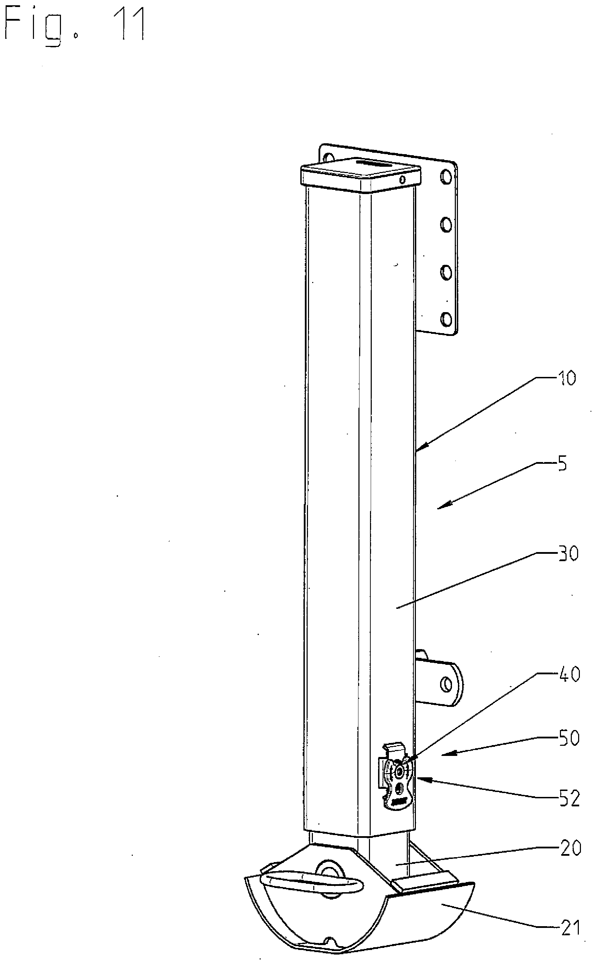

In der Figur 11 ist eine Fallstütze 5 perspektivisch dargestellt, die ein längenverstellbares Teleskoprohr 10 aufweist, an dessen unterem Ende ein Fußelement 21 am Innenrohr 20 angeordnet ist. Die Fallstütze 5 ist mit einer Sicherungseinrichtung 50 ausgestattet, wie dies im Zusammenhang mit den vorhergehenden Figuren beschrieben wurde.

### Bezugszeichenliste

- 1: Wechselaufbau
- 2: Rahmen des Wechselaufbaus
- 4: Stützbein
- 5: Falistütze
- 6: horizontaler Schenkel
- 7: Schwenkachse
- 8: Stützstrebe

- 10: Teleskoprohr

- 20: Innenrohr
- 21: Fußelement
- 22: Durchgangsbohrung

- 30: Außenrohr
- 32: Durchgangsbohrung
- 34: oberes Ende
- 36: unteres Ende (dem Fußelement des Innenrohrs zugewandtes Ende)

- 40: Bolzen
- 41: erstes Ende
- 42: zweites Ende
- 44: Ringbund
- 46: Stirnfläche

- 50: Sicherungseinrichtung
- 52: Drehriegel
- 54: Verschlusselement
- 55: Schraube
- 56: Griffhebel
- 57a,b: Horn
- 58: durchmesserreduzierter Abschnitt
- 59: Nut

- 60: Sicherungskörper
- 62: Öffnung
- 63: Ausnehmung
- 64: Platte
- 65a,b: gebogene Endstücke
- 65c,d: gebogene Seitenstücke
- 66: Zwischenraum

- B: Bolzenachse
- L: Längsachse des Teleskoprohres
- E₁: Ebene des Griffhebels
- E₂: Ebene der Riegelnase / Verschlusselement

- A: reduziertes Maß des Abschnitts 58

## Patentansprüche

1. Längenverstellbares Teleskoprohr (10), das ein Innenrohr (20) und ein Außenrohr (30) aufweist, wobei die Rohre (20, 30) senkrecht zu ihrer Längsachse L verlaufende Durchgangsbohrungen (22, 32) aufweisen,
- mit einem zur gegenseitigen Arretierung der Rohre (20, 30) in einer gewünschten Auszugsposition durch die Durchgangsbohrung (22, 32) hindurchsteckbaren Bolzen (40) mit einer Bolzenachse B und
- mit einer Sicherungseinrichtung (50) zur Sicherung des Bolzens (40) in einer die Rohre (20, 30) arretierenden Stellung, wobei die Sicherungseinrichtung (50) einen an der Außenseite des Außenrohrs (30) angeordneten Sicherungskörper (60) umfasst,
**dadurch gekennzeichnet,**
- **dass** die Sicherungseinrichtung (50) einen, an einem ersten Ende (41) des Bolzens (40) angeordneten Drehriegel (52) aufweist,
- **dass** der Drehriegel (52) einen Griffhebel (56) und mindestens ein Verschlusselement (54) aufweist, wobei sich der Griffhebel (56) und das Verschlusselement (54) von der Bolzenachse B weg erstrecken und in unterschiedlichen Ebenen E₁, E₂ angeordnet sind,
- **dass** der Sicherungskörper (60) eine Öffnung (62) zur Durchführung des Bolzens (40) und mindestens eine in die Öffnung (62) mündende Ausnehmung (63) aufweist, durch die das Verschlusselement (54) in einer ersten Drehstellung des Drehriegels (52) in den Sicherungskörper (60) einführbar ist und
- **dass** das Verschlusselement (54) sich in mindestens einer zweiten Drehstellung des Drehriegels (52) zur axialen Festlegung des Bolzens (40) an dem Sicherungskörper (60) abstützt.

2. Teleskoprohr nach Anspruch 1, **dadurch gekennzeichnet, dass** das Verschlusselement (54) eine Riegelnase ist.

3. Teleskoprohr nach Anspruch 1 oder 2, **dadurch gekennzeichnet, dass** der Griffhebel (56) länger ist als das Verschlusselement (54).

4. Teleskoprohr nach einem der Ansprüche 1 bis 3, **dadurch gekennzeichnet, dass** der Drehriegel (52) drehfest an dem Bolzen (40) angeordnet ist.

5. Teleskoprohr nach einem der Ansprüche 1 bis 4, **dadurch gekennzeichnet, dass** sich der Griffhebel (56) und das Verschlusselement (54) in entgegengesetzter Richtung von der Bolzenachse B erstrecken.

6. Teleskoprohr nach einem der Ansprüche 1 bis 5, **dadurch gekennzeichnet, dass** die Ausnehmung (63) des Sicherungskörpers (60) sich zum unteren Ende (36) des Außenrohrs (30) erstreckt.

7. Teleskoprohr nach einem der Ansprüche 1 bis 6, **dadurch gekennzeichnet, dass** der Sicherungskörper (60) eine Platte (64) ist, die beabstandet zur Außenfläche des Außenrohrs (30) angeordnet ist, wobei zwischen der Platte (64) und der Außenfläche des Außenrohrs (30) ein Zwischenraum (66) gebildet wird.

8. Teleskoprohr nach einem der Ansprüche 1 bis 7, **dadurch gekennzeichnet, dass** der Drehriegel (52) zwei Hörner (57 a, b) aufweist.

9. Teleskoprohr nach Anspruch 8, **dadurch gekennzeichnet, dass** die Hörner (57 a, b) in derselben Ebene E₁ liegen wie der Griffhebel (56).

10. Teleskoprohr nach einem der Ansprüche 8 oder 9, **dadurch gekennzeichnet, dass** die Hörner (57 a, b) und das Verschlusselement (54) in dieselbe Richtung weisen.

11. Teleskoprohr nach einem der Ansprüche 1 bis 10, **dadurch gekennzeichnet, dass** Sicherungskörper (60) und Drehriegel (52) derart aufeinander abgestimmt sind, dass mindestens in der ersten Drehstellung des Drehriegels (52) der Griffhebel (56) den Sicherungskörper (60) überragt.

12. Teleskoprohr nach einem der Ansprüche 1 bis 11, **dadurch gekennzeichnet, dass** der Bolzen (40) eine Verliersicherung aufweist.

13. Teleskoprohr nach Anspruch 12, **dadurch gekennzeichnet, dass** die Verliersicherung ein an einem zweiten Ende (42) des Bolzens (40) gegenüber der Bolzenfläche radial vorstehendes Sicherungselement ist.

14. Teleskoprohr nach Anspruch 13, **dadurch gekennzeichnet, dass** das Sicherungselement ein Ringbund (44) ist.

15. Teleskoprohr nach Anspruch 13 oder 14, **dadurch gekennzeichnet, dass** der Außendurchmesser des Sicherungselementes oder des Ringbundes (44) größer ist als der Durchmesser der Öffnung (62) des Sicherungskörpers (60).

16. Teleskoprohr nach einem der Ansprüche 1 bis 15, **dadurch gekennzeichnet, dass** der Drehriegel (52) einen durchmesserreduzierten Abschnitt (58) aufweist.

17. Stützbein (4) für LKW-Wechselaufbauten mit einem längenverstellbaren Teleskoprohr (10) gemäß einem der Ansprüche 1 bis 16, wobei das Innenrohr (20) ein Fußelement (21) aufweist und wobei am Außenrohr (30) rechtwinklig ein Schenkel (6) zur schwenkbaren Befestigung sowie eine Stützstrebe (8) vorgesehen ist.

18. Fallstütze (5) oder Stützwinde für LKW-Auflieger mit einem längenverstellbaren Teleskoprohr (10) gemäß einem der Ansprüche 1 bis 16, wobei das Innenrohr (20) ein Fußelement (21) aufweist.

## Claims

1. Length-adjustable telescope-like tube (10) which has an inner tube (20) and an outer tube (30), wherein the tubes (20, 30) have through-holes (22, 32) which extend perpendicularly to the longitudinal axis L thereof,
- having a pin (40) which can be inserted through the throughhole (22, 32) for mutual locking of the tubes (20, 30) in a desired extension position and which has a pin axis B, and
- having a securing device (50) for securing the pin (40) in a position which locks the tubes (20, 30), wherein the securing device (50) comprises a securing member (60) which is arranged on the outer side of the outer tube (30),
**characterised in that**
- the securing device (50) has a rotary locking bar (52) which is arranged on a first end (41) of the pin (40),
- **in that** the rotary locking bar (52) has a gripping lever (56) and at least one closure element (54), wherein the gripping lever (56) and the closure element (54) extend away from the pin axis B and are arranged in different planes E₁, E₂,
- **in that** the securing member (60) has an opening (62) for introducing the pin (40) and at least one recess (63) which opens in the opening (62) and through which the closure element (54) can be introduced in a first rotary position of the rotary locking bar (52) into the securing member (60), and
- **in that** the closure element (54) in at least a second rotary position of the rotary locking bar (52) is supported for axially securing the pin (40) to the securing member (60).

2. Telescope-like tube according to claim 1, **characterised in that** the closure element (54) is a locking projection.

3. Telescope-like tube according to claim 1 or 2, **characterised in that** the gripping lever (56) is longer than the closure element (54).

4. Telescope-like tube according to any one of claims 1 to 3, **characterised in that** the rotary locking bar (52) is arranged on the pin (40) in a rotationally secure manner.

5. Telescope-like tube according to any one of claims 1 to 4, **characterised in that** the gripping lever (56) and the closure element (54) extend in opposite directions from the pin axis B.

6. Telescope-like tube according to any one of claims 1 to 5, **characterised in that** the recess (63) of the securing member (60) extends to the lower end (36) of the outer tube (30).

7. Telescope-like tube according to any one of claims 1 to 6, **characterised in that** the securing member (60) is a plate (64) which is arranged spaced apart from the outer face of the outer tube (30), wherein an intermediate space (66) is formed between the plate (64) and the outer face of the outer tube (30).

8. Telescope-like tube according to any one of claims 1 to 7, **characterised in that** the rotary locking bar (52) has two horn-like members (57 a, b).

9. Telescope-like tube according to claim 8, **characterised in that** the horn-like members (57 a, b) are located in the same plane E₁ as the gripping lever (56).

10. Telescope-like tube according to either claim 8 or 9, **characterised in that** the horn-like members (57 a, b) and the closure element (54) face in the same direction.

11. Telescope-like tube according to any one of claims 1 to 10, **characterised in that** the securing member (60) and rotary locking bar (52) are adapted to each other in such a manner that at least in the first rotary position of the rotary locking bar (52) the gripping lever (56) protrudes over the securing member (60).

12. Telescope-like tube according to any one of claims 1 to 11, **characterised in that** the pin (40) has a loss prevention mechanism.

13. Telescope-like tube according to claim 12, **characterised in that** the loss prevention mechanism is a securing element which protrudes radially at a second end (42) of the pin (40) with respect to the pin face.

14. Telescope-like tube according to claim 13, **characterised in that** the securing element is an annular collar (44).

15. Telescope-like tube according to claim 13 or 14, **characterised in that** the outer diameter of the securing element or the annular collar (44) is greater than the diameter of the opening (62) of the securing member (60).

16. Telescope-like tube according to any one of claims 1 to 15, **characterised in that** the rotary locking bar (52) has a portion (58) which is reduced in diameter.

17. Supporting leg (4) for interchangeable lorry bodies having a longitudinally adjustable telescope-like tube (10) according to any one of claims 1 to 16, wherein the inner tube (20) has a base element (21) and wherein on the outer tube (30) a member (6) for pivotable securing and a support strut (8) are provided at right angles.

18. Fall support (5) or support winch for lorry semitrailers having a longitudinally adjustable telescope-like tube (10) according to any one of claims 1 to 16, wherein the inner tube (20) has a base element (21).

## Revendications

1. Tube télescopique (10) de longueur réglable, composé d'une tubulure intérieure (20) et d'une tubulure extérieure (30), lesdites tubulures (20, 30) présentant des perçages traversants (22, 32) qui s'étendent perpendiculairement à leur axe longitudinal L, comprenant
- une broche (40) dotée d'un axe B et pouvant être enfichée à travers lesdits perçages traversants (22, 32), en vue de l'arrêt réciproque desdites tubulures (20, 30) en un emplacement d'extraction souhaité, et
- un dispositif de blocage (50) conçu pour bloquer ladite broche (40) dans une position arrêtant lesdites tubulures (20, 30), ledit dispositif de blocage (50) incluant un corps de blocage (60) situé à la face externe de la tubulure extérieure (30),
**caractérisé par le fait**
- **que** le dispositif de blocage (50) est pourvu d'un verrou tournant (52) situé à une première extrémité (41) de la broche (40),
- **que** ledit verrou tournant (52) comprend un levier de préhension (56) et au moins un élément de fermeture (54), ledit levier de préhension (56) et ledit élément de fermeture (54) s'étendant à distance de l'axe B de la broche, et étant disposés dans des plans E₁, E₂ différents,
- **que** le corps de blocage (60) comprend un orifice (62) dévolu au passage de la broche (40), et au moins un évidement (63) qui débouche dans ledit orifice (62) et par l'intermédiaire duquel l'élément de fermeture (54) peut être introduit dans ledit corps de blocage (60) dans une première position que le verrou tournant (52) a prise par rotation, et
- **que** ledit élément de fermeture (54) est en appui contre ledit corps de blocage (60), dans au moins une seconde position que ledit verrou tournant (52) a prise par rotation, afin de consigner ladite broche (40) à demeure dans le sens axial.

2. Tube télescopique selon la revendication 1, **caractérisé par le fait que** l'élément de fermeture (54) est un mentonnet de verrouillage.

3. Tube télescopique selon la revendication 1 ou 2, **caractérisé par le fait que** le levier de préhension (56) et plus long que l'élément de fermeture (54).

4. Tube télescopique selon l'une des revendications 1 à 3, **caractérisé par le fait que** le verrou tournant (52) est assujetti en rotation à la broche (40).

5. Tube télescopique selon l'une des revendications 1 à 4, **caractérisé par le fait que** le levier de préhension (56) et l'élément de fermeture (54) s'étendent en sens inverse à partir de l'axe B de la broche.

6. Tube télescopique selon l'une des revendications 1 à 5, **caractérisé par le fait que** l'évidement (63) du corps de blocage (60) s'étend en direction de l'extrémité inférieure (36) de la tubulure extérieure (30).

7. Tube télescopique selon l'une des revendications 1 à 6, **caractérisé par le fait que** le corps de blocage (60) est une platine (64) implantée à distance par rapport à la surface externe de la tubulure extérieure (30), un espace interstitiel (66) étant réservé entre ladite platine (64) et ladite surface externe de la tubulure extérieure (30).

8. Tube télescopique selon l'une des revendications 1 à 7, **caractérisé par le fait que** le verrou tournant (52) présente deux cornes (57a, b).

9. Tube télescopique selon la revendication 8, **caractérisé par le fait que** les cornes (57a, b) se trouvent dans le même plan E₁ que le levier de préhension (56).

10. Tube télescopique selon l'une des revendications 8 ou 9, **caractérisé par le fait que** les cornes (57a, b) et l'élément de fermeture (54) pointent dans la même direction.

11. Tube télescopique selon l'une des revendications 1 à 10, **caractérisé par le fait que** le corps de blocage (60) et le verrou tournant (52) sont mutuellement coordonnés de façon telle que le levier de préhension (56) dépasse au-delà dudit corps de blocage (60), au moins dans la première position que ledit verrou tournant (52) a prise par rotation.

12. Tube télescopique selon l'une des revendications 1 à 11, **caractérisé par le fait que** la broche (40) comporte un moyen antiperte.

13. Tube télescopique selon la revendication 12, **caractérisé par le fait que** le moyen antiperte est un élément de blocage faisant saillie radialement, par rapport à la surface de la broche, à une seconde extrémité (42) de ladite broche (40).

14. Tube télescopique selon la revendication 13, **caractérisé par le fait que** l'élément de blocage est un collet annulaire (44).

15. Tube télescopique selon la revendication 13 ou 14, **caractérisé par le fait que** le diamètre extérieur de l'élément de blocage, ou du collet annulaire (44), est plus grand que le diamètre de l'orifice (62) du corps de blocage (60).

16. Tube télescopique selon l'une des revendications 1 à 15, **caractérisé par le fait que** le verrou tournant (52) comporte une région (58) de diamètre réduit.

17. Jambe de force (4) destinée à des carrosseries interchangeables de poids lourds et dotée d'un tube télescopique (10) de longueur réglable, conforme à l'une des revendications 1 à 16, la tubulure intérieure (20) présentant un élément de piètement (21), une aile (6) dévolue à la fixation pivotante, ainsi qu'une entretoise d'appui (8), étant prévues à angle droit sur la tubulure extérieure (30).

18. Béquille (5) ou treuil de support destiné(e) à des remorques de poids lourds et doté(e) d'un tube télescopique (10) de longueur réglable, conforme à l'une des revendications 1 à 16, la tubulure intérieure (20) présentant un élément de piètement (21).
